# EUROPEAN PATENT APPLICATION

(11) **EP 3 273 189 A1**
(43) Date of publication of application: **24.01.2018**
(21) Application number: 15885668.2
(22) Date of filing: 26.10.2015
(51) Int. Cl.: F25C 5/12

(54) **ICE CREAM ICE SHAVING CONTAINER FOR ICE SHAVER**

(30) Priority: 18.03.2015 KR 20150037612
(71) Applicant: Escarlap Agricultural Co., Ltd., Gochang-gun, Jeollabuk-do 56452 (KR); Kim, Kwangyoung, Simwon-myeon Gochang-gun Jeollabuk-do 56401 (KR)
(72) Inventor: KIM, Kwangyoung, Gochang-gun Jeollabuk-do 56401 (KR)
(74) Representative: Verscht, Thomas Kurt Albert
(86) International application number: PCT/KR2015/011333
(87) International publication number: WO 2016/148367

(57) **Abstract**

The present invention relates to an ice cream ice shaving container for an ice shaver, which: enables ice cream to be integrally frozen and fixed on a bottom surface inside a coupling projection of a container portion in which frozen ice cream is contained; enables the frozen ice cream to integrally descend and revolve with a container compressing hole without separating therefrom when the frozen ice cream descends and revolves through the container compressing hole of the ice shaver; enables the frozen ice cream to be sequentially and evenly shaved by a blade even when the frozen ice cream is slanted to one side, in order to prevent severe shaking from occurring during the shaving of the frozen ice cream; and preemptively inhibits the generation of vibration and noise from the ice shaver while enabling an ice cream product to be obtained that is always uniform and soft.

## Description

### Technical Field

The present invention relates to an ice cream container for an ice shaving device. More particularly, the present invention relates to an ice cream container for an ice shaving device, wherein the container, in which frozen ice cream is frozen integrally, has holding protrusions provided on an inner surface of a bottom part thereof, so that when the frozen ice cream is lowered and rotated by a compressing disc of the ice shaving device, the frozen ice cream is lowered and rotated integrally with the compressing disc without separating therefrom. Accordingly, even when the frozen ice cream is inclined to one side, the frozen ice cream is shaved incrementally uniformly by a blade, whereby severe shaking is prevented during the shaving of the frozen ice cream, vibration and noises are prevented from being generated by the ice shaving device, and an ice cream product that is always uniform and soft is obtained.

### Background Art

A commonly known ice shaving device is used to provide ice cream in the form of snow ice cream by shaving solid frozen ice cream using a blade into a fine particle shapes such as snow.

Conventionally, ice cream is distributed in a frozen state in a container, and the ice cream is put into the ice shaving device. Then, the frozen ice cream contained in the container is shaved by the blade, thereby obtaining a more hygienic and safer ice cream product.

Meanwhile, the applicant of the present invention has filed Korean patent application Publication No. 10-2014-0180505 for an ice shaving device, in which the frozen ice cream is contained in the container, and the frozen ice cream is lowered in the container by compression and rotation of a compressing disc without being exposed outside, and is incrementally shaved by the blade, thereby shaving the frozen ice cream in a clean state while preventing penetration of external germs and the like into the frozen ice cream.

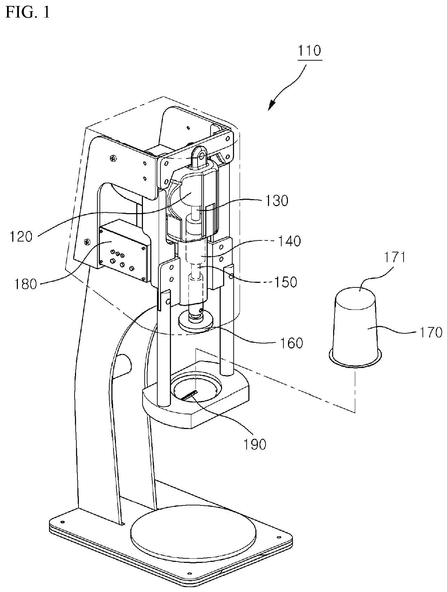

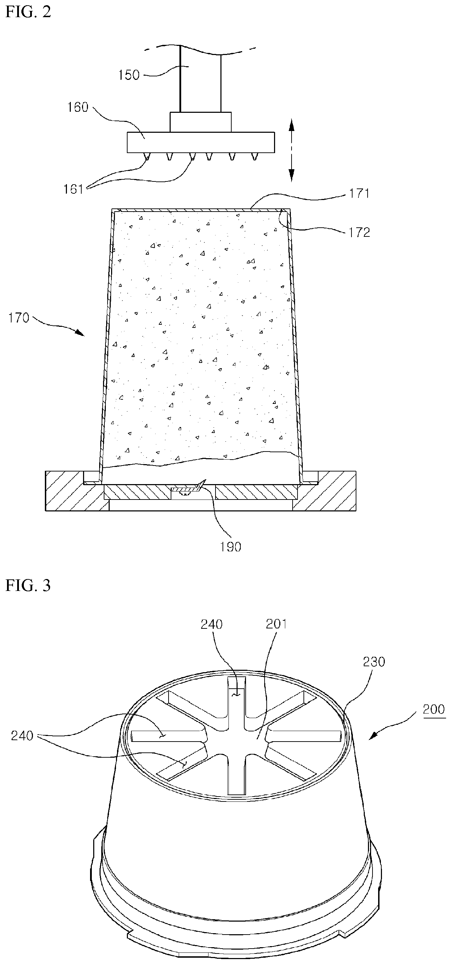

The technical structure thereof will be described with reference to FIGS. 1 and 2. A lifting and lowering rod 130 is connected to a driving actuator 120 provided in the ice shaving device body 110, and is connected at an end thereof to a rotary motor 140, such that the rotary motor 140 lifts and lowers by the driving actuator 120. Here, a compressing disc 160 for compressing a frozen ice cream is installed at an end of a rotary shaft 150 connected to the rotary motor 140. Here, a plurality of protrusions 161 protrude downward from the bottom of the compressing disc 160, and a blade 190 is installed in a lower side of the ice shaving device body 110. Accordingly, the frozen ice cream contained in a container body 170 is compressed and rotated to be shaved.

Accordingly, the driving actuator 120 and the rotary motor 140 are operated by a control unit 180 installed at a side of the ice shaving device body 110, and then the compressing disc 160 installed at the end of the rotary shaft 150 connected to the rotary motor 140 lowers and the protrusions 161 of the compressing disc 160 compresses a bottom part 171 of the container body 170 containing the frozen ice cream. Thereafter, a breakable portion formed on the inner surface of the bottom part 171 is cut at the bottom of the container body 170, and thus the bottom part 171 is separated from the container body 170 and rotates and lowers toward the blade 190 together with the frozen ice cream, whereby the frozen ice cream is shaved.

However, in the case of the ice shaving device as described above, the surface of the frozen ice cream contained in the container body 170 that is shaved by coming into contact with the blade 190 may be uneven horizontally, and a central portion of the ice cream surface may protrude convexly due to expansion of volume of the ice cream generated during freezing. On the other hand, as shown in FIG. 2, since the surface of the frozen ice cream is inclined, the frozen ice cream contained in the container body 170 that is shaved by coming into contact with the blade 190 is shaved in the inclined state to one side, so the frozen ice cream may be severely shaken when shaved while rotating. As a result, extreme vibrations and noises are generated by the ice shaving device, and it is difficult to obtain a uniform and soft ice cream product.

In addition, due to the operation of the compressing disc 160 that momentarily compresses and rotates the bottom part 171 of the container body 170 containing the frozen ice cream, there is a problem that the frozen ice cream contained in the container body 170 is directly dropped on the blade 190, which is distanced by a predetermined gap from the frozen ice cream, so the surface of the frozen ice cream is broken or the blade portion of the blade 190 is broken.

### Documents of Related Art

(Patent Document 1) Korean Patent Application Publication No. 10-2014-180505 (published on December 15, 2014)

### Disclosure

### Technical Problem

Accordingly, the present invention has been made keeping in mind the above problems occurring in the prior art, and an object of the present invention is to provide an ice cream container for an ice shaving device, in which frozen ice cream is frozen integrally with holding protrusions provided on the inner surface of a bottom part of a container body containing the frozen ice cream, so that when the frozen ice cream is lowered and rotated by a compressing disc of the ice shaving device, the frozen ice cream is lowered and rotated integrally with the compressing disc without separating therefrom. Accordingly, even when the frozen ice cream is inclined to one side, the frozen ice cream is shaved incrementally and uniformly by a blade, whereby severe shaking is prevented during the shaving of the frozen ice cream, vibration and noises are prevented from being generated by the ice shaving device, and an ice cream product that is always uniform and soft is obtained. Further, the blade portion of the blade shaving the frozen ice cream is prevented from being easily broken or abraded, and the container body is made of a soft synthetic resin so that when the bottom part is compressed, the periphery of the bottom part is stretched by a breakable groove formed thereon whereby the bottom part is easily efficiently separated from the container body by rotational motion.

### Technical Solution

In order to accomplish the above object, the present invention provides an ice cream container for ice shaving device configured with: an ice shaving device body including driving actuator, a lifting and lowering rod connected to the driving actuator and lifting and lowering a rotary motor rotating frozen ice cream, a rotary shaft connected to the rotary motor, a compressing disc mounted on the rotary shaft and rotating and compressing the frozen ice cream, and a blade shaving the frozen ice cream rotated and lowered by compression pressure of the compressing disc; and a container body installed such that the frozen ice cream contained therein is lowered and rotated by compression and rotation of the compressing disc.

The container includes: the container body having a wide opening and a narrow bottom part and containing the frozen ice cream;
a breakable groove formed on a periphery of the bottom part at a position between a bottom end of the container body and the bottom part of the container body, and configured such that the bottom part is separable; and
a plurality of protrusion coupling slots formed radially on the bottom part of the container body and to which a compression fitting protrusion of the compressing disc is inserted.

The container body containing the frozen ice cream may be made of a soft synthetic resin, and the bottom part configured to be separable by the compressing disc may be provided with a plurality of holding protrusions integrally protruding from an inner surface of the bottom part.

The container body containing the frozen ice cream may be configured to be spaced apart from the bottom part having the plurality of protrusion coupling slots by a predetermined gap at a lower portion of the container body with an interposition of an inclined portion.

A rotation preventing protrusion piece may be integrally formed on a rim of the opening of the container body containing the frozen ice cream, the rotation preventing protrusion piece preventing rotation of the container body during shaving of ice cream, and the protrusion coupling slots may be formed to become gradually narrower from outside to inside, so that the compressing disc is easily inserted and separated therefrom.

### Advantageous Effects

As described above, according to the ice cream container for ice shaving device of the present invention, Since the frozen ice cream is frozen integrally with the holding protrusions provided on the inner surface of the bottom part of the container body containing the frozen ice cream, when the frozen ice cream is lowered and rotated by the compressing disc of the ice shaving device, the frozen ice cream can be lowered and rotated integrally with the compressing disc without separating therefrom. Accordingly, even when the frozen ice cream is inclined to one side, the frozen ice cream can be shaved incrementally and uniformly by the blade, whereby severe shaking can be prevented during the shaving of the frozen ice cream, vibration and noises can be prevented from generating from the ice shaving device, and an ice cream product that is always uniform and soft can be obtained. Further, the blade portion of the blade shaving the frozen ice cream can be prevented from being easily broken or abraded, and the container body is made of a soft synthetic resin so that when the bottom part is compressed, the periphery of the bottom part is stretched by the breakable groove formed thereon whereby the bottom part can be easily efficiently separated from the container body by rotational motion.

### Description of Drawings

FIG. 1 a schematic perspective view showing a conventional an ice shaving device.
FIG. 2 is a frontal cross-sectional view showing a container installed inside the ice shaving device of FIG. 1, the container containing frozen ice cream to be shaved.
FIG. 3 is a schematic perspective view showing an ice cream container for ice shaving device.
FIG. 4 is a partially cut-away, bottom perspective view showing the container for the ice shaving device of the present invention.
FIG. 5 is a bottom view showing the container for the ice shaving device of the present invention.
FIG. 6 is a frontal cross-sectional view showing the container for the ice shaving device of the present invention.
FIG. 7 is an enlarged cross-sectional view showing part B of FIG. 6.

### Best Mode

Hereinafter, an embodiment of an ice cream container for an ice shaving device of the present invention will be described in detail.

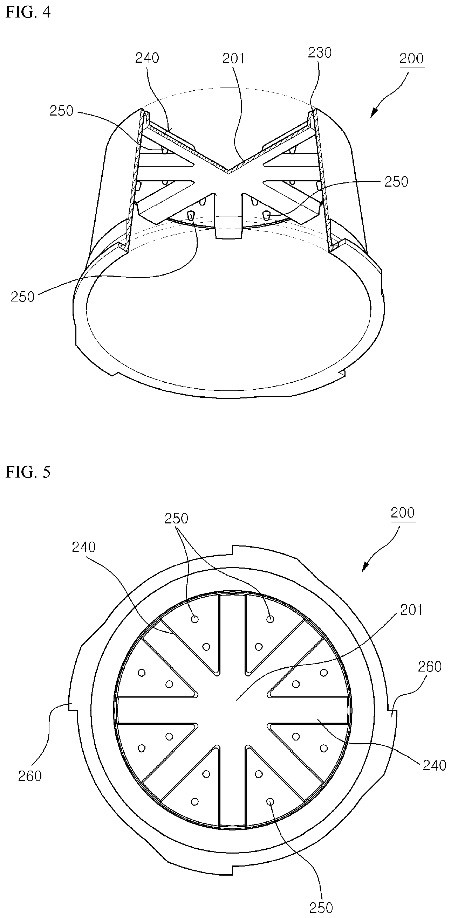

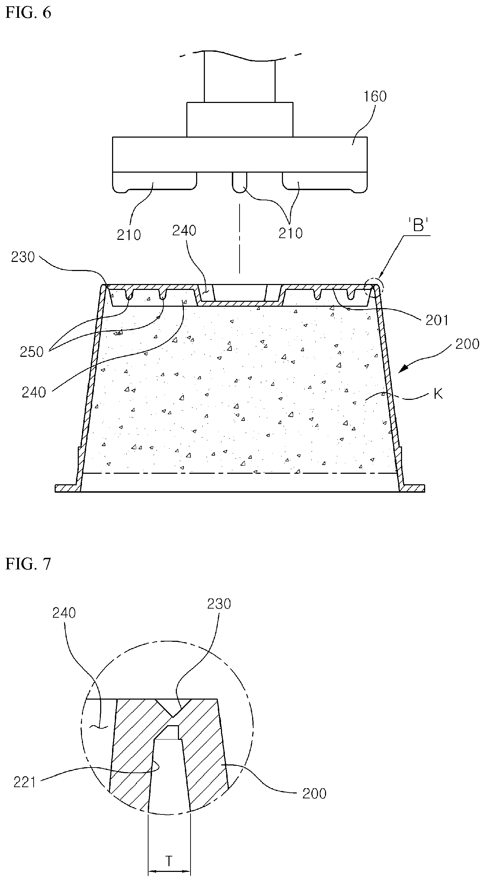

FIG. 3 is a schematic perspective view showing a ice cream container for ice shaving device, FIG. 4 is a partially cut-away, bottom perspective view showing the container for the ice shaving device of the present invention, FIG. 5 is a bottom view showing the container for the ice shaving device of the present invention, FIG. 6 is a frontal cross-sectional view showing the container for the ice shaving device of the present invention, and FIG. 7 is an enlarged cross-sectional view showing part B of FIG. 6. The present invention will be described in detail with reference to FIG. 2.

In other words, a driving actuator 120 installed inside an ice shaving device body 110 is connected with a lifting and lowering rod 130, and an end of the lifting and lowering rod 130 is connected to a rotary motor 140 such that the rotary motor 140 is lifted and lowered by the driving actuator 120. A compressing disc 160 is mounted at an end of the rotary shaft 150 connected to the rotary motor 140 such that the compressing disc compresses and rotates frozen ice cream inside a container body 200. A blade 190 is installed at the ice shaving device body 110, the blade shaves the frozen ice cream that is lowered and rotated by a compression pressure of the compressing disc 160. The container body 200 is installed such that the frozen ice cream K contained in the container is lowered by compression and rotation of the compressing disc 160, and the container is formed in a tapered shape having a wide opening and a narrow bottom part 201.

Further, a control unit 180 for controlling operation of the driving actuator 120 and the rotary motor 140 is installed at a side of the ice shaving device body 110.

Furthermore, a compression fitting protrusion 210 protrudes in a cross shape from a bottom surface of the compressing disc 160 coming into contact with and compressing the bottom part 201 of the container body 200 containing the frozen ice cream K, and a breakable groove 230 is formed on the periphery of the bottom part 201 at a position between a bottom end of the container body 200 and the bottom part of the container, and is configured such that the bottom part 201 is separable.

In addition, a plurality of protrusion coupling slots 240 are formed radially on the bottom part 201 of the container body 200 such that the compression fitting protrusion 210 of the compressing disc 160 is inserted therein. Here, the container body 200 containing the frozen ice cream K is made of a soft synthetic resin, and is installed such that the periphery of the bottom part is stretched by compression of the compressing disc 160 and then is cut at the breakable groove 230 by rotation of the compressing disc, whereby the bottom part can be separated.

Moreover, in the present invention, the bottom part 201 installed at a lower portion of the container body 200 to be separable by the compressing disc 160 is provided with a plurality of holding protrusions 250 integrally protruding from an inner surface of the bottom part. The container body 200 containing the frozen ice cream K is configured to be spaced apart from the bottom part 201 having the plurality of protrusion coupling slots 240 by a predetermined gap T at the lower portion of the container body 200 with the interposition of an inclined portion 221.

Further, a rotation preventing protrusion piece 260 for preventing rotation of the container body 200 during shaving of ice cream is integrally formed on the rim of the opening of the container body 200 containing the frozen ice cream K.

### Mode for Invention

Hereinafter, the operation and effect of the present invention will be described in detail.

As shown in FIGS. 2 to 7, the driving actuator 120 installed inside the ice shaving device body 110 is connected with the lifting and lowering rod 130. Here, the end of the lifting and lowering rod 130 is connected to the rotary motor 140, such that the rotary motor 140 is lifted and lowered by driving of the driving actuator 120. The rotary motor 140 is connected at a lower side thereof to the rotary shaft 150, and the compressing disc 160 is installed at the end of the rotary shaft. The compressing disc 160 operates such that the frozen ice cream K contained in the container body 200 is lowered by compression and rotation of the compressing disc, the container being formed in a tapered shape having the wide opening and the narrow bottom part 201.

Further, the blade 170 for shaving the frozen ice cream is installed in a lower side of the ice shaving device body 110, so that the frozen ice cream K contained in the container body 200 that is rotated and lowered by compression pressure of the compressing disc 160 is shaved in a snow form. Meanwhile, the control unit 180 installed at the side of the ice shaving device body 110 controls operation of the driving actuator 120 and the rotary motor 140 to enable efficient shaving operation of the frozen ice cream K.

Meanwhile, the compressing disc 160, which comes into contact with and compresses the bottom part 201 of the container body 200 containing the frozen ice cream K, is provided with the compression fitting protrusion 210 protruding in a cross shape. In this state, the plurality of protrusion coupling slots 240 are formed radially on the bottom part 201 of the container body 200, so that the compression fitting protrusion 210 of the compressing disc 160 can be firmly inserted into the plurality of protrusion coupling slots 240 of the bottom part 201 in a cross form.

Herein, the protrusion coupling slots 240 are formed to become gradually narrower from outside to inside, so that the compressing disc 160 can be easily inserted and separated therefrom.

Thus, the compression fitting protrusion 210 is prevented from separation from the protrusion coupling slots 240 due to rotation of the compressing disc 160, so that the bottom part 201 of the container body 200 and the frozen ice cream K fixed thereto can integrally rotate without interruption.

Further, by the container body 200 containing the frozen ice cream K and by the bottom part 201 having the plurality of protrusion coupling slots 240, the compression fitting protrusion 210 can be completely prevented from being separated from the bottom part 201 of the container body 200, or being moved laterally.

In addition, the breakable groove 230 is formed on the periphery of the bottom part at a position between the bottom end of the container body 200 and the bottom part of the container. The periphery of the bottom part 201 is slightly stretched by the breakable groove 230 when the compressing disc 160 compresses the bottom part 201 of the container body 200, the bottom part being spaced apart from the lower portion of the container body 200 by the predetermined gap T with the interposition of the inclined portion 221. Thereafter, the bottom part 201 rotates integrally with the compressing disc 160, and can be easily separated from the container body 200.

Further, the container body 200 containing the frozen ice cream K is made of a soft synthetic resin, so that that the frozen ice cream K contained in the container body 200 can be fixed and separated therefrom.

On the other hand, the plurality of holding protrusions 250 integrally protrude from the inner surface of the bottom part 201 provided at the lower portion of the container body 200 to be separable by the compressing disc 160. Accordingly, the frozen ice cream contained in the container body 200 is frozen together with the holding protrusions 250, so that even when the frozen ice cream K contained in the container body 200 is frozen in the state in which a central part of a surface thereof protrudes convexly or the surface is inclined to one side, the frozen ice cream K can be formed integrally with the bottom part 201.

Accordingly, when the frozen ice cream is shaved by the blade 190 while being slowly lowered and rotated integrally with the bottom part 201 by the compressing disc 160, the frozen ice cream can be shaved uniformly incrementally from the inclined surface without moving to one side. Consequently, it is possible to prevent severe shaking during the shaving of the frozen ice cream, to prevent vibrations and noises from being generated by the ice shaving device, and to obtain an ice cream product that is always uniform and soft. Further, it is possible to prevent the blade 190 from being easily broken or abraded due to dropping of the frozen ice cream contained in the container body 200.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiment of the present invention is disclosed only for illustrative purposes and should not be construed as limiting the present invention, and the patent right of the present invention is not limited to the embodiment disclosed in the detailed description. The scope of the invention should be determined on the basis of the descriptions in the appended claims, not any specific embodiment, and all equivalents thereof should belong to the scope of the invention.

### <Description of the Reference Numerals in the Drawings>

110: ice shaving device body
120: driving actuator
130: lifting and lowering rod
140: rotary motor
150: rotary shaft 160: compressing disc
180: control unit 190: blade
200: container 201: bottom part
210: compression fitting protrusion
221: inclined portion
230: breakable groove
240: protrusion coupling slots
250: holding protrusions
260: rotation preventing protrusion piece
K: frozen ice cream

## Claims

1. An ice cream container for an ice shaving device configured with:
an ice shaving device body (110) including driving actuator (120), a lifting and lowering rod (130) connected to the driving actuator (120) and lifting and lowering a rotary motor (140) rotating frozen ice cream (K), a rotary shaft (150) connected to the rotary motor (140), a compressing disc (160) mounted on the rotary shaft (150) and rotating and compressing the frozen ice cream, and a blade (190) shaving the frozen ice cream rotated and lowered by compression pressure of the compressing disc (160); and
a container body (200) installed such that the frozen ice cream (K) contained therein is lowered and rotated by compression and rotation of the compressing disc (160), the container comprising:
the container body (200) having a wide opening and a narrow bottom part (201) and containing the frozen ice cream (K) ;
a breakable groove (230) formed on a periphery of the bottom part (201) at a position between a bottom end of the container body (200) and the bottom part (201) of the container body, and configured such that the bottom part (201) is separable; and
a plurality of protrusion coupling slots (240) formed radially on the bottom part (201) of the container body (200) and to which a compression fitting protrusion (210) of the compressing disc (160) is inserted.

2. The container of claim 1, wherein the container body (200) containing the frozen ice cream (K) is made of a soft synthetic resin.

3. The container of claim 1, wherein the bottom part 201 installed to be separable by the compressing disc (160) is provided with a plurality of holding protrusions (250) integrally protruding from an inner surface of the bottom part.

4. The container of claim 1, wherein the container body (200) containing the frozen ice cream (K) is configured to be spaced apart from the bottom part (201) having the plurality of protrusion coupling slots (240) by a predetermined gap (T) at a lower portion of the container body (200) with an interposition of an inclined portion (221).

5. The container of claim 1, wherein a rotation preventing protrusion piece (260) is integrally formed on a rim of the opening of the container body (200) containing the frozen ice cream (K), the rotation preventing protrusion piece preventing rotation of the container body (200) during shaving of ice cream.

6. The container of claim 1, wherein the protrusion coupling slots (240) are formed to become gradually narrower from outside to inside, so that the compressing disc (160) is easily inserted and separated therefrom.
